# EUROPEAN PATENT APPLICATION

(11) **EP 4 478 441 A1**
(43) Date of publication of application: **18.12.2024**
(21) Application number: 23749845.6
(22) Date of filing: 03.02.2023
(51) Int. Cl.: H01M 4/13, H01M 4/134, H01M 4/36, H01M 4/38, H01M 4/48, H01M 4/62

(54) **NON-AQUEOUS ELECTROLYTE SECONDARY BATTERY**

(30) Priority: 07.02.2022 JP 2022016896
(71) Applicant: Panasonic Energy Co., Ltd., Osaka 570-8511 (JP); Panasonic Holdings Corporation, Osaka, 571-8501 (JP)
(72) Inventor: KATOGI, Akihiro, Kadoma-shi, Osaka 571-0057 (JP); TASHITA, Takamitsu, Kadoma-shi, Osaka 571-0057 (JP); OURA, Yuji, Kadoma-shi, Osaka 571-0057 (JP)
(74) Representative: Novagraaf International SA
(86) International application number: PCT/JP2023/003508
(87) International publication number: WO 2023/149529

(57) **Abstract**

Provided is a non-aqueous electrolyte secondary battery having high capacity and excellent charge/discharge cycle characteristics. The non-aqueous electrolyte secondary battery according to one aspect of the present disclosure comprises a positive electrode, a negative electrode, and a non-aqueous electrolyte, wherein: the negative electrode has a negative electrode current collector and a negative electrode mixture layer formed on the surface of the negative electrode current collector; the negative electrode mixture layer has a first negative electrode mixture layer facing the negative electrode current collector and a second negative electrode mixture layer facing the positive electrode; the negative electrode mixture layer includes a particulate negative electrode active material; at least the second negative electrode mixture layer includes carbon nanotubes; and when the interparticle porosity of the negative electrode active material in the first negative electrode mixture layer is S1, and the interparticle porosity of the negative electrode active material in the second negative electrode mixture layer is S2, 3.5≤S2/S1≤5.0 is satisfied.

## Description

### TECHNICAL FIELD

The present disclosure relates to a non-aqueous electrolyte secondary battery.

### BACKGROUND ART

From the viewpoint of higher capacity of non-aqueous electrolyte secondary batteries, non-aqueous electrolyte secondary batteries have been widely used as secondary batteries having a high energy density. Patent Literature 1 discloses art of setting a negative electrode mixture layer to have a bilayer structure and setting a porosity of a negative electrode mixture layer A2 on a side of a positive electrode to be larger than a porosity of a negative electrode mixture layer A1 on a side of a negative electrode current collector.

### CITATION LIST

### PATENT LITERATURE

PATENT LITERATURE 1: Japanese Unexamined Patent Application Publication No. 2003-77463

### SUMMARY

The non-aqueous electrolyte secondary batteries have been required to have a further higher capacity in recent years, and therefore a Si-based material or the like, which has a large proportion of expansion and contraction, has been used as a negative electrode active material included in a negative electrode mixture layer. The negative electrode mixture layer having a high porosity, such as the negative electrode mixture layer A2 described in Patent Literature 1, may fail to keep conductive path between particles of the negative electrode active material due to change in volume with charge and discharge to deteriorate the battery capacity. Patent Literature 1 does not investigate improvement of charge-discharge cycle characteristics, and still has room for improvement.

It is an advantage of the present disclosure to provide a non-aqueous electrolyte secondary battery having a high capacity and excellent charge-discharge cycle characteristics.

A non-aqueous electrolyte secondary battery of an aspect of the present disclosure comprises: a positive electrode; a negative electrode; and a non-aqueous electrolyte, wherein the negative electrode has a negative electrode current collector and a negative electrode mixture layer formed on a surface of the negative electrode current collector, the negative electrode mixture layer has a first negative electrode mixture layer facing the negative electrode current collector and a second negative electrode mixture layer facing the positive electrode, the negative electrode mixture layer includes a particle negative electrode active material, at least the second negative electrode mixture layer includes carbon nanotube, and when an interparticle porosity of the negative electrode active material in the first negative electrode mixture layer is specified as S1 and an interparticle porosity of the negative electrode active material in the second negative electrode mixture layer is specified as S2, S1 and S2 satisfy 3.5 ≤ S2/S1 ≤ 5.0.

According to the non-aqueous electrolyte secondary battery of the present disclosure, the battery capacity and the charge-discharge cycle characteristics may be improved.

### BRIEF DESCRIPTION OF DRAWING

FIG. 1 is an axial sectional view of a cylindrical secondary battery of an example of an embodiment.
FIG. 2 is a sectional view of a negative electrode in an example of an embodiment.
FIG. 3 is a schematic view illustrating a cross section of graphite particles in an example of an embodiment.

### DESCRIPTION OF EMBODIMENTS

Hereinafter, an example of an embodiment of a cylindrical secondary battery according to the present disclosure will be described in detail with reference to the drawings. In the following description, specific shapes, materials, values, directions, and the like, which are examples for facilitating understanding of the present invention, may be appropriately modified with specifications of cylindrical secondary batteries. An exterior is not limited to be cylindrical, and may be rectangular or the like, for example. When a plurality of embodiments and modified examples are included in the following description, use in appropriate combination of characteristic portions thereof are anticipated in advance.

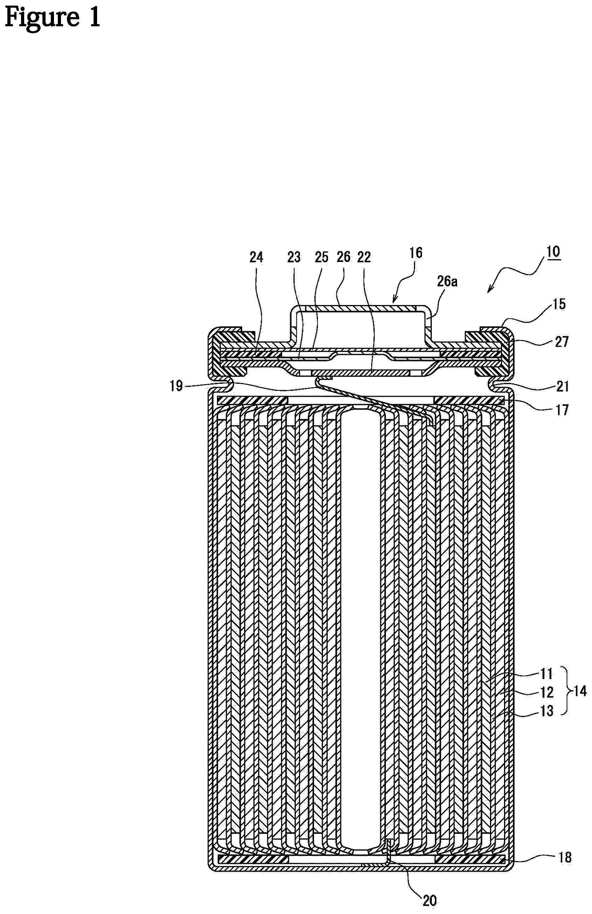

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An end of an opening of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided at an end on a terminal winding side of the negative electrode 12, the negative electrode lead 20 extends through an outside of the insulating plate 18 toward the bottom side of the exterior 15, and welded with a bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13 and the non-aqueous electrolyte, which constitute the secondary battery 10, particularly the negative electrode 12, will be described in detail.

### [Negative Electrode]

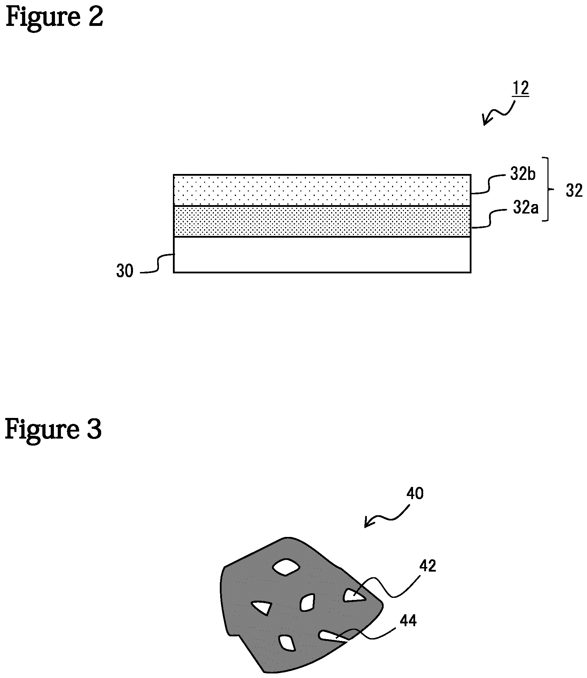

FIG. 2 is a sectional view of the negative electrode 12 of an example of an embodiment. As illustrated in FIG. 2, the negative electrode 12 has a negative electrode current collector 30 and a negative electrode mixture layer 32 formed on a surface of the negative electrode current collector 30. The negative electrode mixture layer 32 has a first negative electrode mixture layer 32a facing the negative electrode current collector 30 and a second negative electrode mixture layer 32b facing the positive electrode 11.

Thicknesses of the first negative electrode mixture layer 32a and the second negative electrode mixture layer 32b may be equal to or different from each other. The thickness of the second negative electrode mixture layer 32b is smaller than the thickness of the first negative electrode mixture layer 32a, for example. A ratio between the thickness of the second negative electrode mixture layer 32b and the thickness of the first negative electrode mixture layer 32a is preferably greater than or equal to 2:8 and less than or equal to 5:5, and more preferably greater than or equal to 2:8 and less than or equal to 4:6.

For the negative electrode current collector 30, a foil of a metal stable within a potential range of the negative electrode, such as copper, a film in which such a metal is disposed on a surface layer, or the like is used. A thickness of the negative electrode current collector 30 is, for example, greater than or equal to 5 µm and less than or equal to 30 µm.

The negative electrode mixture layer 32 includes a particle negative electrode active material. The negative electrode active material includes, for example, particle graphite such as natural graphite and artificial graphite (which may be referred to as "graphite particles 40" hereinafter). In terms of ease of regulation of internal porosity described later and the like, the graphite preferably includes artificial graphite.

FIG. 3 is a schematic view illustrating a cross section of the graphite particles 40. As illustrated in FIG. 3, the graphite particles 40 have: closed gaps 42 unconnected from the particle inside to the particle surface (hereinafter, internal gaps 42); and gaps 44 connected from the particle inside to the particle surface (hereinafter, external gaps 44) in view of the cross section of the graphite particles 40.

A spacing of a (002) face (d₀₀₂) of the graphite particles 40 by an X-ray wide-angle diffraction method is preferably, for example, greater than or equal to 0.3354 nm, more preferably greater than or equal to 0.3357 nm, preferably less than 0.340 nm, and more preferably less than or equal to 0.338 nm. A crystallite size (Lc(002)) of the graphite particles 40 determined by an X-ray diffraction method is preferably, for example, greater than or equal to 5 nm, more preferably greater than or equal to 10 nm, preferably less than or equal to 300 nm, and more preferably less than or equal to 200 nm. The spacing (d₀₀₂) and the crystallite size (Lc(002)) satisfying the above ranges tend to increase the battery capacity compared with a case of not satisfying the above ranges.

The negative electrode active material may further include a metal that forms an alloy with lithium, such as Si and Sn, or an alloy, an oxide, or the like that includes these metals. These materials may occlude a large amount of lithium ions compared with graphite, and thus may attempt to increase in the battery capacity.

The negative electrode active material preferably includes a Si-based material. Examples of the Si-based material may include: Si; an alloy including Si; a Si oxide represented by SiOₓ (0.5 ≤ x ≤ 1.6); a Si-containing material in which Si fine particles are dispersed in a lithium silicate phase represented by Li_{2y}SiO_{(2+y)} (0 < y < 2); and a Si-containing material in which Si fine particles are dispersed in a carbon phase.

From the viewpoints of improvement of the battery capacity, inhibition of deterioration of the charge-discharge cycle characteristics, and the like, a proportion of the Si-based material in the negative electrode mixture layer 32 relative to a total mass of the negative electrode active material is preferably greater than or equal to 1 mass% and less than or equal to 10 mass%, and more preferably greater than or equal to 3 mass% and less than or equal to 7 mass%. The Si-based material preferably includes SiOₓ (0.5 ≤ x ≤ 1.6).

When an interparticle porosity of the negative electrode active material in the first negative electrode mixture layer 32a is specified as S1 and an interparticle porosity of the negative electrode active material in the second negative electrode mixture layer 32b is specified as S2, S1 and S2 satisfy 3.5 ≤ S2/S1 ≤ 5.0. This improves permeability of the non-aqueous electrolyte in the negative electrode mixture layer 32. The interparticle porosity of the negative electrode active material refers to a two-dimensional value determined from a proportion of an area of the interparticle gaps in the negative electrode active material relative to a sectional area of the negative electrode mixture layer 32. S2/S 1 may be determined by calculating: the interparticle porosity S 1 of the negative electrode active material in the first negative electrode mixture layer 32a; and the interparticle porosity S2 of the negative electrode active material in the second negative electrode mixture layer 32b, as the following procedure.

### <Method for Measuring Interparticle Porosity of Negative Electrode Active Material>

(1) A cross section of the negative electrode mixture layer 32 is exposed. Examples of the method for exposing the cross section include a method of cutting a part of the negative electrode 12 and processing the negative electrode 12 with an ion-milling apparatus (for example, IM4000PLUS, manufactured by Hitachi High-Tech Corporation) to expose the cross section of the negative electrode mixture layer 32.
(2) By using a scanning electron microscope, a backscattered electron image of the exposed cross section of each of the first negative electrode mixture layer 32a and the second negative electrode mixture layer 32b in the negative electrode mixture layer 32 is photographed. The magnification with photographing the backscattered electron image is, for example, 800.
(3) The sectional image obtained as above is imported into a computer, and subjected to a binarization processing by using an image analysis software (for example, ImageJ, available from National Institutes of Health). A binarization-processed image is obtained in which a particle cross section in the sectional image is converted in black and gaps present in the particle cross section are converted in white.
(4) In the portion of the gaps converted in white in each of the binarization-processed image of the first negative electrode mixture layer 32a and the second negative electrode mixture layer 32b, gaps excluding both internal gaps 42 of the graphite particles 40 and external gaps 44 with a width of less than or equal to 3 µm are specified as the interparticle gaps in the negative electrode active material, and the area of the gaps is calculated. The interparticle porosity of the negative electrode active material may be calculated based on the following formula. Interparticle porosity (%) of negative electrode active material = Area of interparticle gaps of negative electrode active material / Area of cross section of negative electrode mixture layer × 100
(5) Each of S 1 and S2 is determined as an average value of the above measurement three times.

Examples of means for regulating the interparticle porosity of the negative electrode active material in the first negative electrode mixture layer 32a and the second negative electrode mixture layer 32b include: means for regulating a filling density of the negative electrode mixture layer 32; and means for regulating an internal porosity of the graphite particles 40. In the latter means, reducing the internal porosity of the graphite particles 40 may increase the interparticle porosity of the negative electrode active material without lowering the filling density of the first negative electrode mixture layer 32a and the second negative electrode mixture layer 32b. In other words, S2/S1 may be increased by setting the filling densities of the first negative electrode mixture layer 32a and the second negative electrode mixture layer 32b to be similar and by reducing the internal porosity of graphite particles B included in the second negative electrode mixture layer 32b compared with graphite particles A included in the first negative electrode mixture layer 32a.

The graphite particles A mainly included in the first negative electrode mixture layer 32a may be produced as follows, for example. Cokes (precursor) being a main raw material is crushed into a predetermined size, the crushed product is aggregated with a binder, and then calcined and graphitized at a temperature of greater than or equal to 2600°C in a state of pressurizing molding into a block shape. The graphitized block-shaped molded product is crushed and sieved to obtain the graphite particles A having a desired size. Here, the internal porosity may be regulated to be larger than that of the graphite particles B, described later, with an amount of a volatile component added into the block-shaped molded product. The internal porosity of the graphite particles A is preferably greater than or equal to 8% and less than or equal to 20%, more preferably greater than or equal to 10% and less than or equal to 18%, and particularly preferably greater than or equal to 12% and less than or equal to 16%. When a part of the binder added into the cokes (precursor) is evaporated during the calcining, the binder may be used as the volatile component. Examples of such a binder include pitch.

The graphite particles B mainly included in the second negative electrode mixture layer 32b may be produced as follows, for example. Cokes (precursor) being a main raw material is crushed into a predetermined size, the crushed product is calcined and graphitized in an aggregated state with a binder at a temperature of greater than or equal to 2600°C and sieved to obtain the graphite particles B having a desired size. Here, the internal porosity of the graphite particles B may be regulated with a particle diameter of the crushed precursor, a particle diameter of the precursor in the aggregated state, and the like. For example, increasing the particle diameter of the crushed precursor may reduce the internal porosity. The average particle diameter (median diameter in terms of volume, which may be referred to as D50 hereinafter) of the crushed precursor may be within a range of greater than or equal to 12 µm and less than or equal to 20 µm. The internal porosity of the graphite particles B is preferably less than or equal to 5%, more preferably greater than or equal to 1% and less than or equal to 5%, and particularly preferably greater than or equal to 3% and less than or equal to 5%.

In the negative electrode mixture layer 32, at least the second negative electrode mixture layer 32b includes carbon nanotube (hereinafter, which may be referred to as CNT). Containing CNT in the second negative electrode mixture layer 32b having a high interparticle porosity of the negative electrode active material may retain the conductive path between the particles of the negative electrode active material even after repeated charge and discharge. As noted above, the conductive path may be retained by setting S2/S1 to be within the predetermined range while improving permeability of the non-aqueous electrolyte, and thereby both the increase in the capacity and the improvement of the charge-discharge cycle characteristics may be achieved. The first negative electrode mixture layer 32a may include CNTs, or may not include CNTs.

When a content rate of CNT in the first negative electrode mixture layer 32a is specified as A1 and a content rate of CNT in the second negative electrode mixture layer is specified as A2, A1 and A2 preferably satisfy A2/A1 > 1. When a total amount of CNT included in the negative electrode mixture layer 32 is constant, a case where A2 is larger than A1 improves the charge-discharge cycle characteristics.

The content rate of CNT in the second negative electrode mixture layer 32b is preferably greater than or equal to 0.01 mass% and less than or equal to 0.1 mass%, and more preferably greater than or equal to 0.01 mass% and less than or equal to 0.05 mass% relative to the mass of the negative electrode active material. This range may sufficiently achieve the content of the negative electrode active material in the negative electrode mixture layer.

A G/D ratio obtained by Raman spectrometry of CNT included in the second negative electrode mixture layer 32b is preferably greater than or equal to 40 and less than or equal to 130. This may remarkably improve the charge-discharge cycle characteristics. Although a detail of the mechanism is unclear, the G/D ratio indicates a crystal ratio, and thereby it is presumed that an appropriate amount of structural defects in CNT is required in order to achieve the conductive path in the second negative electrode mixture layer 32b.

The G/D ratio refers to a ratio of a peak intensity of a G-Band (greater than or equal to 1550 cm⁻¹ and less than or equal to 1600 cm⁻¹) to a peak intensity of a D-Band (greater than or equal to 1300 cm⁻¹ and less than or equal to 1350 cm⁻¹) in the Raman spectrum. CNT having a high G/D ratio has high crystallinity.

The Raman spectrum on CNT may be measured by using a Raman spectrometer (for example, NRS-5500, manufactured by JASCO Corporation). For example, CNT is fractioned on a slide, and planarized by using a spatula to prepare a sample, and the sample is subjected to the measurement. The measurement conditions are as follows, for example.
Measurement time: 5 seconds
Number of Scans: 2
OD of dimmer filter: 0.3
Magnification of objective lens: 100
Measurement range: greater than or equal to 950 cm⁻¹ and less than or equal to 1900 cm⁻¹

Examples of the CNT contained in the negative electrode mixture layer 32 may include a single-wall carbon nanotube (SWCNT) and a multiwall carbon nanotube (MWCNT). The CNT contained in the negative electrode mixture layer 32 is preferably SWCNT. The CNT contained in the negative electrode mixture layer 32 may be a combination of SWCNT and MWCNT.

A diameter of SWCNT is, for example, greater than or equal to 0.1 nm and less than or equal to 2 nm. A length of SWCNT is, for example, greater than or equal to 0.1 µm and less than or equal to 200 µm. Here, the diameter of SWCNT is calculated by measuring diameters of 10 SWCNTs by using a transmission electron microscope (TEM) to average the measured diameters. The length of SWCNT is calculated by measuring lengths of 10 SWCNTs by using a scanning electron microscope (SEM) to average the measured lengths. A diameter of MWCNT is, for example, greater than or equal to 3 nm and less than or equal to 100 nm. A length of MWCNT is, for example, greater than or equal to 0.1 µm and less than or equal to 200 µm. The diameter and length of MWCNT may be calculated by the method same as for SWCNT.

The negative electrode mixture layer 32 may contain a conductive agent other than CNT. Examples of the conductive agent other than CNT include carbon materials such as carbon black (CB), acetylene black (AB), Ketjenblack, and graphite. These may be used singly, or in combination of two or more.

The negative electrode mixture layer 32 may further include a binder. Examples of the binder include a fluororesin, a polyimide resin, an acrylic resin, a polyolefin resin, polyacrylonitrile (PAN), styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or in combination of two or more thereof.

Next, a method for forming the first negative electrode mixture layer 32a and the second negative electrode mixture layer 32b will be described. For example, a negative electrode active material including the graphite particles A, the binder, and a solvent such as water are firstly mixed to prepare a first negative electrode mixture slurry. Separately, a negative electrode active material including the graphite particles B, the binder, and a solvent such as water are mixed to prepare a second negative electrode mixture slurry. The first negative electrode mixture slurry is applied on both surfaces of a negative electrode current collector, dried, and then, on the coating of the first negative electrode mixture slurry, the second negative electrode mixture slurry is applied on both the surfaces, and dried. Further, the first negative electrode mixture layer 32a and the second negative electrode mixture layer 32b may be rolled with a roller to form the negative electrode mixture layer 32. In the method, the first negative electrode mixture slurry is applied and dried, and then the second negative electrode mixture slurry is applied. However, the second negative electrode mixture slurry may be applied after the first negative electrode mixture slurry is applied and before dried. Alternatively, the first negative electrode mixture slurry may be applied, dried, and rolled, and then the second negative electrode mixture slurry may be applied on the first negative electrode mixture layer 32a.

Changing conditions of rolling the first negative electrode mixture layer 32a and the second negative electrode mixture layer 32b may freely regulate each filling density. Note that, even when the first negative electrode mixture layer 32a and the second negative electrode mixture layer 32b are simultaneously rolled as noted above, the interparticle porosities of the negative electrode active materials are not equal. For example, by changing particle size distribution of the graphite particles A and the graphite particles B, the interparticle porosities of the negative electrode active material in the first negative electrode mixture layer 32a and the second negative electrode mixture layer 32b may be regulated.

### [Positive Electrode]

The positive electrode 11 is composed of, for example, a positive electrode current collector such as metal foil and a positive electrode mixture layer formed on the positive electrode current collector. For the positive electrode current collector, a foil of a metal stable within a potential range of the positive electrode, such as aluminum, a film in which such a metal is disposed on a surface layer, or the like may be used. The positive electrode mixture layer includes, for example, a positive electrode active material, a binder, a conductive agent, and the like. The positive electrode 11 may be produced by, for example, applying a positive electrode mixture slurry including the positive electrode active material, the binder, the conductive agent, and the like on the positive electrode current collector, drying the coating to form the positive electrode mixture layer, and then rolling this positive electrode mixture layer.

Examples of the positive electrode active material may include a lithium-transition metal oxide containing a transition metal element such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or as a mixture thereof. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3).

Examples of the conductive agent include carbon-based particles such as carbon black (CB), acetylene black (AB), Ketjenblack, carbon nanotube (CNT), graphene, and graphite. These may be used singly, or in combination of two or more.

Examples of the binder include fluororesins such as polytetrafluoroethylene (PTFE) and polyvinylidene fluoride (PVdF), polyimide resins, acrylic resins, polyolefin resins, and polyacrylonitrile (PAN). These may be used singly, or in combination of two or more.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, olefin resins such as polyethylene or polypropylene, cellulose, or the like is preferable. The separator 13 may be a laminate having a cellulose fiber layer and a thermoplastic resin fiber layer such as an olefin resin. The separator 13 may be a multilayer separator including a polyethylene layer and a polypropylene layer, or a separator in which a material such as an aramid resin and a ceramic is applied on a surface of the separator 13 may also be used.

### [Non-Aqueous Electrolyte]

The non-aqueous electrolyte is a liquid electrolyte (electrolyte liquid) including a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen of these solvents is at least partially replaced with a halogen atom such as fluorine.

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone and γ-valerolactone; and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted derivative, fluorinated cyclic carbonates such as fluoroethylene carbonate (FEC), fluorinated chain carbonates, and fluorinated chain carboxylates such as methyl fluoropropionate (FMP) are preferably used.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(CiF₂ₗ₊₁SO₂)(CₘF₂ₘ₊₁SO₂) {l and m represent integers of 1 or more}. These lithium salts may be used singly, or as a mixture thereof. Among them, LiPF₆ is preferably used from the viewpoints of ion conductivity, electrochemical stability, and the like. A concentration of the lithium salt is preferably, greater than or equal to 0.8 mol and less than or equal to 1.8 mol per litter of the solvent.

### EXAMPLES

Hereinafter, the present disclosure will be further described with Examples, but the present disclosure is not limited to these Examples.

### <Example 1>

### [Production of Positive Electrode]

As a positive electrode active material, a powdery lithium-transition metal oxide represented by LiCo_{0.979}Zr_{0.001}Mg_{0.01}Al_{0.01}O₂ was used. Mixing 95 parts by mass of the positive electrode active material, 2.5 parts by mass of acetylene black (AB) as a conductive agent, and 2.5 parts by mass of a polyvinylidene fluoride powder as a binder was performed, and an appropriate amount of N-methyl-2-pyrrolidone (NMP) was further added to prepare a positive electrode mixture slurry. This slurry was applied on both surfaces of a positive electrode current collector composed of aluminum foil (thickness: 15 µm) with a doctor blade method, the coating was dried, and then the coating was rolled with a roller to produce a positive electrode in which a positive electrode mixture layer was formed on both the surfaces of the positive electrode current collector.

### [Production of Graphite Particles A]

Cokes was crushed until the average particle diameter (D50) was 17 µm, and pitch as a binder was added into the crushed cokes to aggregate the cokes. An isotropic pressure was applied to this aggregate to produce a block-shaped molded product having a density of greater than or equal to 1.6 g/cm³ and less than or equal to 1.9 g/cm³. This block-shaped molded product was calcined at a temperature of 2800°C for graphitization, then the graphitized block-shaped molded product was crushed, and sieved by using a sieve with 250 mesh to obtain graphite particles A having an average particle diameter (D50) of 23 µm.

### [Production of Graphite Particles B]

Cokes was crushed until the average particle diameter (D50) was 13 µm, and pitch as a binder was added into the crushed cokes to aggregate the cokes until the average particle diameter (D50) was 18 µm. This aggregate was calcined at a temperature of 2800°C for graphitization. Then, the graphitized block-shaped molded product was crushed, and sieved by using a sieve with 250 mesh to obtain graphite particles B having an average particle diameter (D50) of 23 µm.

### [Production of Negative Electrode]

The graphite particles A and SiO were mixed at a mass ratio of 95:5 to prepare a first negative electrode active material. Mixing 100 parts by mass of the first negative electrode active material, 1 part by mass of a sodium salt of carboxymethylcellulose (CMC-Na), and 1 part by mass of styrene-butadiene copolymer rubber (SBR) was performed, and this mixture was kneaded in water to prepare a first negative electrode mixture slurry.

A mixed graphite obtained by mixing 25 parts by mass of the graphite particles A and 75 parts by mass of the graphite particles B was mixed with SiO at a mass ratio of 95:5 to prepare a second negative electrode active material. Mixing 100 parts by mass of the second negative electrode active material, 1 part by mass of CMC-Na, 1 part by mass of SBR, and 0.02 parts by mass of single-wall carbon nanotube (SWCNT) was performed, and this mixture was kneaded in water to prepare a second negative electrode mixture slurry.

The first negative electrode mixture slurry was applied on both surfaces of a negative electrode current collector composed of copper foil with a doctor blade method, and dried to form a first negative electrode mixture layer. On the first negative electrode mixture layer, the above second negative electrode mixture slurry was applied and dried to form a second negative electrode mixture layer. In this time, an applied mass ratio per unit area between the first negative electrode mixture slurry and the second negative electrode mixture slurry was 7:3. The first negative electrode mixture layer and the second negative electrode mixture layer were rolled with a roller to produce a negative electrode.

### [Production of Non-Aqueous Electrolyte]

Into 100 parts by mass of a non-aqueous solvent in which ethylene carbonate (EC), propylene carbonate (PC), and ethyl methyl carbonate (EMC) were mixed at a volume ratio of 10:10:80, LiPF₆ was dissolved at a concentration of 1.0 mol/L to prepare a non-aqueous electrolyte.

### [Production of Test Cell]

A positive electrode lead made of aluminum was attached to the positive electrode current collector, and a negative electrode lead made of nickel was attached to the negative electrode current collector. The positive electrode and the negative electrode were spirally wound via a separator made of a polyolefin, and then press-formed in a radial direction to produce a flat and wound electrode assembly. This electrode assembly was housed in an exterior composed of an aluminum laminate sheet, the above non-aqueous electrolyte was injected, and then an opening of the exterior was sealed to obtain a test cell with 62 mm in height, 35 mm in width, and 3.6 mm in thickness.

### <Example 2>

A test cell was produced in the same manner as in Example 1 except that, in the preparation of the first negative electrode mixture slurry, 0.01 part by mass of SWCNT was further mixed to produce the mixture.

### <Example 3>

A test cell was produced in the same manner as in Example 1 except that: in the preparation of the first negative electrode mixture slurry, 0.01 part by mass of SWCNT was further mixed to produce the mixture; and in the preparation of the second negative electrode mixture slurry, the mixing ratio of SWCNT was changed to 0.03 parts by mass.

### <Example 4>

A test cell was produced in the same manner as in Example 1 except that, in the preparation of the first negative electrode mixture slurry, 0.02 parts by mass of SWCNT was further mixed to produce the mixture.

### <Example 5>

A test cell was produced in the same manner as in Example 2 except that, in the preparation of the second negative electrode mixture slurry, the mixing ratio between the graphite particles A and the graphite particles B was changed to 34:66.

### <Example 6>

A test cell was produced in the same manner as in Example 2 except that, in the preparation of the second negative electrode mixture slurry, the graphite particles B and SiO were mixed at a mass ratio of 95:5 to prepare the second negative electrode active material.

### <Example 7>

A test cell was produced in the same manner as in Example 1 except that, in the production of the negative electrode, the applying mass ratio per unit area between the first negative electrode mixture slurry and the second negative electrode mixture slurry was changed to 8:2.

### <Example 8>

A test cell was produced in the same manner as in Example 1 except that, in the production of the negative electrode, the applying mass ratio per unit area between the first negative electrode mixture slurry and the second negative electrode mixture slurry was changed to 5:5.

### <Comparative Example 1>

A test cell was produced in the same manner as in Example 1 except that, in the production of the negative electrode, the following points were changed.
(1) In the preparation of the first negative electrode mixture slurry, a mixed graphite obtained by mixing 50 parts by mass of the graphite particles A and 50 parts by mass of the graphite particles B was mixed with SiO at a mass ratio of 95:5 to prepare the first negative electrode active material.
(2) In the preparation of the second negative electrode mixture slurry, the mixing ratio between the graphite particles A and the graphite particles B was changed to 50:50, and SWCNT was not mixed to produce the mixture.

### <Comparative Example 2>

A test cell was produced in the same manner as in Example 1 except that, in the preparation of the second negative electrode mixture slurry, the mixing ratio between the graphite particles A and the graphite particles B was changed to 60:40, and SWCNT was not mixed to produce the mixture.

### <Comparative Example 3>

A test cell was produced in the same manner as in Example 1 except that, in the preparation of the second negative electrode mixture slurry, SWCNT was not mixed to produce the mixture.

### <Comparative Example 4>

A test cell was produced in the same manner as in Example 1 except that, in the production of the negative electrode, the following points were changed.
(1) In the preparation of the first negative electrode mixture slurry, a mixed graphite obtained by mixing 50 parts by mass of the graphite particles A and 50 parts by mass of the graphite particles B was mixed with SiO at a mass ratio of 95:5 to prepare the first negative electrode active material. In the preparation of the first negative electrode mixture slurry, 0.02 parts by mass of SWCNT was further mixed to produce the mixture.
(2) In the preparation of the second negative electrode mixture slurry, the mixing ratio between the graphite particles A and the graphite particles B was changed to 50:50.

### <Comparative Example 5>

A test cell was produced in the same manner as in Example 1 except that, in the preparation of the first negative electrode mixture slurry, 0.02 parts by mass of SWCNT was further mixed to produce the mixture, and in the preparation of the second negative electrode mixture slurry, the mixing ratio between the graphite particles A and the graphite particles B was changed to 60:40.

### [Evaluation of Interparticle Porosity of Negative Electrode Active Material]

Under an environment temperature of 25°C, the test cell of each of Examples and each of Comparative Examples was charged at a constant current of 0.2 C until 4.2 V, and then charged at a constant voltage of 4.2 V until 1/50 C. Thereafter, the test cell was discharged at a constant current of 0.2 C until 2.5 V. This course of charge and discharge was specified as one cycle, and five cycles were performed. The negative electrode was taken out of the test cell of each of Examples and each of Comparative Examples after the five cycles to calculate an interparticle porosity of the negative electrode active material.

### [Evaluation of Capacity Retention]

Under an environment temperature of 25°C, the test cell of each of Examples and each of Comparative Examples was charged at a constant current of 1 C until 4.2 V, and then charged at a constant voltage of 4.2 V until 1/50 C. Thereafter, the test cell was discharged at a constant current of 0.5 C until 2.5 V. This course of charge and discharge was specified as one cycle, and 200 cycles were performed. A capacity retention in the charge-discharge cycle of the test cell of each of Examples and each of Comparative Examples was determined with the following formula. Capacity retention (%) = (Discharge capacity at 200th cycle / Discharge capacity at 1st cycle) × 100

Table 1 summarizes the evaluation results of the capacity retention of the test cell of each of Examples and each of Comparative Examples. Table 1 also shows the ratio between the graphite particles A and the graphite particles B in each of the first negative electrode mixture layer and the second negative electrode mixture layer, the content rates of CNT in the first negative electrode mixture layer and the second negative electrode mixture layer, thicknesses of the first negative electrode mixture layer and the second negative electrode mixture layer, and S2/S 1 in the negative electrode mixture layer.

**[Table 1]**

| | Negative electrode mixture layer | | | | | | | Evaluation results |
|---|---|---|---|---|---|---|---|---|
| | Graphite ratio (particles A : particles B) | | CNT content rate [%] | | Thickness [µm] | | Interparticle gap ratio (S2/S1) | Capacity retention [%] |
| | Second layer | First layer | Second layer (A2) | First layer (A1) | Second layer (B2) | First layer (B1) | | |
| Example 1 | 25:75 | 100:0 | 0.02 | 0 | 3 | 7 | 4.0 | 82 |
| Example 2 | 25:75 | 100:0 | 0.02 | 0.01 | 3 | 7 | 4.0 | 87 |
| Example 3 | 25:75 | 100:0 | 0.03 | 0.01 | 3 | 7 | 4.0 | 89 |
| Example 4 | 25:75 | 100:0 | 0.02 | 0.02 | 3 | 7 | 4.0 | 87 |
| Example 5 | 34:66 | 100:0 | 0.02 | 0.01 | 3 | 7 | 3.5 | 84 |
| Example 6 | 0:100 | 100:0 | 0.02 | 0.01 | 3 | 7 | 5.0 | 89 |
| Example 7 | 25:75 | 100:0 | 0.02 | 0 | 2 | 8 | 4.1 | 81 |
| Example 8 | 25:75 | 100:0 | 0.02 | 0 | 5 | 5 | 3.9 | 84 |
| Comparative Example 1 | 50:50 | 50:50 | 0 | 0 | 3 | 7 | 1.0 | 68 |
| Comparative Example 2 | 60:40 | 100:0 | 0 | 0 | 3 | 7 | 2.0 | 74 |
| Comparative Example 3 | 25:75 | 100:0 | 0 | 0 | 3 | 7 | 4.0 | 72 |
| Comparative Example 4 | 50:50 | 50:50 | 0.02 | 0.02 | 3 | 7 | 1.0 | 74 |
| Comparative Example 5 | 60:40 | 100:0 | 0.02 | 0.02 | 3 | 7 | 2.0 | 79 |

| | | | | | | | | |
|---|---|---|---|---|---|---|---|---|
| Second layer: second negative electrode mixture layer, First layer: first negative electrode mixture layer | | | | | | | | |

The batteries of Examples have improved capacity retention compared with the batteries of Comparative Examples. It was considered that the capacity retention was improved because permeability of the electrolyte liquid in the batteries of Examples was improved in an entirety of the negative electrode mixture layer by setting S2/S 1 to be within the predetermined range and by containing carbon nanotube in at least the second negative electrode mixture layer.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30 Negative electrode current collector, 32 Negative electrode mixture layer, 32a First negative electrode mixture layer, 32b Second negative electrode mixture layer, 40 Graphite particle, 42 Internal gap, 44 External gap

## Claims

1. A non-aqueous electrolyte secondary battery, comprising:
a positive electrode;
a negative electrode; and
a non-aqueous electrolyte, wherein
the negative electrode has a negative electrode current collector and a negative electrode mixture layer formed on a surface of the negative electrode current collector,
the negative electrode mixture layer has a first negative electrode mixture layer facing the negative electrode current collector and a second negative electrode mixture layer facing the positive electrode,
the negative electrode mixture layer includes a particle negative electrode active material,
at least the second negative electrode mixture layer includes carbon nanotube, and
when an interparticle porosity of the negative electrode active material in the first negative electrode mixture layer is specified as S1 and an interparticle porosity of the negative electrode active material in the second negative electrode mixture layer is specified as S2, S1 and S2 satisfy 3.5 ≤ S2/S1 ≤ 5.0.

2. The non-aqueous electrolyte secondary battery according to claim 1, wherein the negative electrode active material includes a Si-based material.

3. The non-aqueous electrolyte secondary battery according to claim 2, wherein a proportion of the Si-based material relative to a total mass of the negative electrode active material is greater than or equal to 1 mass% and less than or equal to 10 mass%.

4. The non-aqueous electrolyte secondary battery according to claim 2 or 3, wherein the Si-based material includes SiOₓ (0.5 ≤ x ≤ 1.6).

5. The non-aqueous electrolyte secondary battery according to any one of claims 1 to 4, wherein a G/D ratio obtained by Raman spectrometry of the carbon nanotube is greater than or equal to 40 and less than or equal to 130.

6. The non-aqueous electrolyte secondary battery according to any one of claims 1 to 5, wherein, when a content rate of the carbon nanotube in the first negative electrode mixture layer is specified as A1 and a content rate of the carbon nanotube in the second negative electrode mixture layer is specified as A2, A1 and A2 satisfy A2/A1 > 1.

7. The non-aqueous electrolyte secondary battery according to any one of claims 1 to 6, wherein a ratio between a thickness of the second negative electrode mixture layer and a thickness of the first negative electrode mixture layer is greater than or equal to 2:8 and less than or equal to 5:5.
